# EUROPÄISCHE PATENTSCHRIFT

(11) **EP 2 893 409 B1**
(45) Veröffentlichungstag und Bekanntmachung des Hinweises auf die Patenterteilung: **01.01.2020**
(21) Anmeldenummer: 13786192.8
(22) Anmeldetag: 22.10.2013
(51) Int. Cl.: G05B 23/02

(54) **BENUTZERSCHNITTSTELLE UND VERFAHREN ZUR BEHEBUNG VON STÖRUNGEN EINER INDUSTRIELLEN ANLAGE**
USER INTERFACE AND METHOD FOR ELIMINATING INTERFERENCE IN AN INDUSTRIAL INSTALLATION
INTERFACE UTILISATEUR ET PROCÉDÉ POUR REMÉDIER À DES DYSFONCTIONNEMENTS D'UNE INSTALLATION INDUSTRIELLE

(30) Priorität: 13.11.2012 DE 102012220639
(43) Veröffentlichungstag der Anmeldung: 15.07.2015
(73) Patentinhaber: Siemens Aktiengesellschaft, 80333 München (DE)
(72) Erfinder: BUTTER, Christian, 80797 München (DE); POLITIADIS-BEHRENS, Alexander, 91315 Höchstadt A.D. Aisch (DE); SEIBERT, Eckhard, 76767 Hagenbach (DE); WOLF, Silvio, 85540 Haar (DE)
(86) Internationale Anmeldenummer: PCT/EP2013/072042
(87) Internationale Veröffentlichungsnummer: WO 2014/075876

(56) Entgegenhaltungen:
- DE-A1- 10 217 107
- DE-A1-102010 061 132
- GB-A- 2 275 814

## Beschreibung

In heutigen Leitwarten industrieller Anlagen werden hochkomplexe technische Datenmengen visualisiert und von Bedienpersonal ausgewertet: beispielsweise eine Struktur der industriellen Anlage sowie Anzahl, Prioritäten und Quittierungszustände von Störungsmeldungen. Diese Datenmengen werden entsprechend ihren jeweiligen Informationsquellen getrennt voneinander dargestellt. Beipielsweise werden Alarmlisten, Bedienbilder und Anlagenstruktur in voneinander getrennten Anzeigebereichen visualisiert.

Das Dokument DE 10 2010 061 132 A1 offenbart Verfahren und Geräte zum Verwalten von Prozesssteuerungs-Status-Rollups. Unter anderem ist in diesem Dokument eine Benutzerschnittstelle gezeigt, in der Meldungen in einem Prozesssteuerungssystem matrixförmig basierend auf den Kategorien der Meldungen und deren Schweregrad angeordnet sind.

Der Erfindung liegt die Aufgabe zugrunde, eine Benutzerschnittstelle und ein Verfahren zur Behebung von Störungen einer industriellen Anlage anzugeben, mit welchen die wichtigsten Störungsmeldungen schnell identifiziert und behoben werden können.

Diese Aufgabe wird durch eine Benutzerschnittstelle gelöst, welche eine Datenschnittstelle aufweist, die zum Empfang von Störungsmeldungen eingerichtet ist, welchen jeweils eine Priorität aus einer Mehrzahl von Prioritäten und ein Anlagenteil aus einer Mehrzahl von Anlagenteilen einer industriellen Anlage zugeordnet sind. Die Benutzerschnittstelle umfasst ferner berührungsempfindliche Anzeigeflächen, welche in einer zweidimensionalen Matrix angeordnet sind, wobei die Prioritäten in einer ersten Dimension der Matrix und die Anlagenteile in einer zweiten Dimension der Matrix sortiert sind. Ein zweiter Anzeigebereich ist neben den Anzeigeflächen angeordnet und zur Ausgabe einer logischen Sicht, insbesondere einer Block- oder Baumdarstellung, der industriellen Anlage eingerichtet. Weiterhin beinhaltet die Benutzerschnittstelle eine Recheneinheit, welche programmiert ist zur Anzeige der Störungsmeldungen entsprechend deren Priorität und Anlagenteil auf den entsprechenden Anzeigeflächen, zur Untergliederung der logischen Sicht in die Anlagenteile, zur Anzeige der Störungsmeldungen in oder neben den jeweiligen Anlagenteilen in der logischen Sicht , und zur Detektion einer Berührung einer der Anzeigeflächen, zur Auswahl der jeweiligen Priorität, des jeweiligen Anlagenteils sowie der zugeordneten Störungsmeldungen und zur Initiierung einer Benutzerführung zur Steuerung des ausgewählten Anlagenteils zur Bearbeitung der ausgewählten Störungsmeldungen.

Bei dem Verfahren zur Behebung von Störungen einer industriellen Anlage werden über eine Datenschnittstelle Störungsmeldungen empfangen, welchen jeweils eine Priorität aus einer Mehrzahl von Prioritäten und ein Anlagenteil aus einer Mehrzahl von Anlagenteilen einer industriellen Anlage zugeordnet ist oder wird. Berührungsempfindliche Anzeigeflächen werden in einer zweidimensionalen Matrix (30) angeordnet, wobei die Prioritäten in einer ersten Dimension der Matrix und die Anlagenteile in einer zweiten Dimension der Matrix sortiert werden. In einem zweiten Anzeigebereich neben den Anzeigeflächen wird eine logische Sicht, insbesondere eine Block- oder Baumdarstellung, der industriellen Anlage angezeigt. Eine Recheneinheit zeigt Störungsmeldungen entsprechend deren Priorität und Anlagenteil auf den entsprechenden Anzeigeflächen an, untergliedert die logische Sicht in die Anlagenteile, zeigt die Störungsmeldungen in oder neben den jeweiligen Anlagenteilen in der logischen Sicht an, detektiert eine Berührung einer der Anzeigeflächen, wählt daraufhin die jeweilige Priorität, den jeweiligen Anlagenteil sowie die zugeordneten Störungsmeldungen aus und initiiert eine Benutzerführung zur Steuerung des ausgewählten Anlagenteils zur Bearbeitung der ausgewählten Störungsmeldungen.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden.

Durch den zweiten Anzeigebereich wird ein Überblick über die komplette industrielle Anlage bereitgestellt. Die kombinierte Darstellung mit der Matrix ermöglicht es, einzelne Fehlerquellen in einer großen Menge von Informationen zu erkennen. Die Verknüpfung der Darstellung der Störungsmeldungen in der logischen Sicht mit der Darstellung der Störungsmeldungen in der Matrix erleichtert einem Bediener die Analyse. Überblicks- und Detailinformationen werden vorteilhaft in einer kombinierten Darstellung zusammengeführt, wodurch der Bediener die Störungsmeldungen effizienter analysieren bzw. bearbeiten und den Zustand der industriellen Anlage einfach und schnell beurteilen kann.

Durch die Benutzerschnittstelle und das Verfahren wird eine Prioritätsmatrix bereitgestellt, welche die technischen Anlagendaten zielgerichtet visuell aufbereitet. Hierzu werden die Störungsmeldungen beispielsweise horizontal mit von links nach rechts absteigender Priorität und vertikal nach Anlagenteil sortiert und ausgegeben.

Durch die in der Matrix nach Prioritäten und Anlagenteilen sortierte Ausgabe der Störungsmeldungen wird einem Bediener ein Analysieren und Priorisieren der Störungsmeldungen weitgehend abgenommen. Der Bediener kann daher die wichtigsten Störungsmeldungen schnell identifizieren und beheben.

Die Anzahl der betrachteten Prioritäten und Anlagenteile ist flexibel, da die Matrix durch entsprechende Auslegung der Benutzerschnittstelle beliebig skalierbar ist. Die Benutzerschnittstelle lässt sich somit für unterschiedlichste Anlagentypen, Anlagengrößen und Prozesse skalieren und anpassen.

Alle zur Lagebeurteilung relevanten technischen Anlagendaten werden in einer Bildschirmansicht zusammengeführt. Die Beurteilung von wichtigen und weniger wichtigen Störungsmeldungen und deren Verortung wird erleichtert.

Gemäß einer Ausführungsform besteht jede Anzeigefläche aus einer Digitalanzeige oder einem Tastschirm. Durch Berührung oder Druck auf die Anzeigefläche wird ein berührungsempfindlicher Kontakt oder Schalter betätigt.

In einer Weiterbildung sind sämtliche Anzeigeflächen auf einem einzigen Tastschirm, insbesondere einem berührungsempfindlichen Tablett, angeordnet.

In einer Weiterbildung ist die Benutzerschnittstelle Teil einer Leitwarte und die industrielle Anlage ein Kraftwerk. Alternativ ist die Benutzerschnittstelle ein berührungsempfindliches Tablett und die industrielle Anlage eine Windkraftanlage.

Gemäß einer Ausführungsform des Verfahrens zeigt die Recheneinheit auf den Anzeigeflächen sowohl eine Anzahl offener Störungsmeldungen als auch eine Anzahl quittierter Störungsmeldungen an. Auf jeder Anzeigefläche der Prioritätsmatrix werden somit sowohl Informationen über die Anzahl als auch die Quittierungszustände der jeweiligen Störungsmeldungen angezeigt.

In einer Weiterbildung zeigt die Recheneinheit am Rand der Matrix einen Tabellenkopf an, welcher eine Legende für die Prioritäten und Anlagenteile sowie für jede Priorität eine Summe der Anzahl offener Störungsmeldungen über alle Anlagenteile anzeigt.

Auf dem computerlesbaren Datenträger ist ein Computerprogramm gespeichert, welches das Verfahren ausführt, wenn es in einem Computer abgearbeitet wird. Das Computerprogramm wird in einem Computer abgearbeitet und führt dabei das Verfahren aus.

Im Folgenden werden Ausführungsbeispiele der Erfindung anhand von Figuren näher erläutert. Es zeigen:
- Figur 1: eine Benutzerschnittstelle mit Schaltern, welche in einer Matrix angeordnet sind und jeweils eine Digitalanzeige 60 beinhalten,
- Figur 2: eine Benutzerschnittstelle, welche Störungsmeldungen sowohl in einer Matrix als auch in einer logischen Sicht einer industriellen Anlage anzeigt.

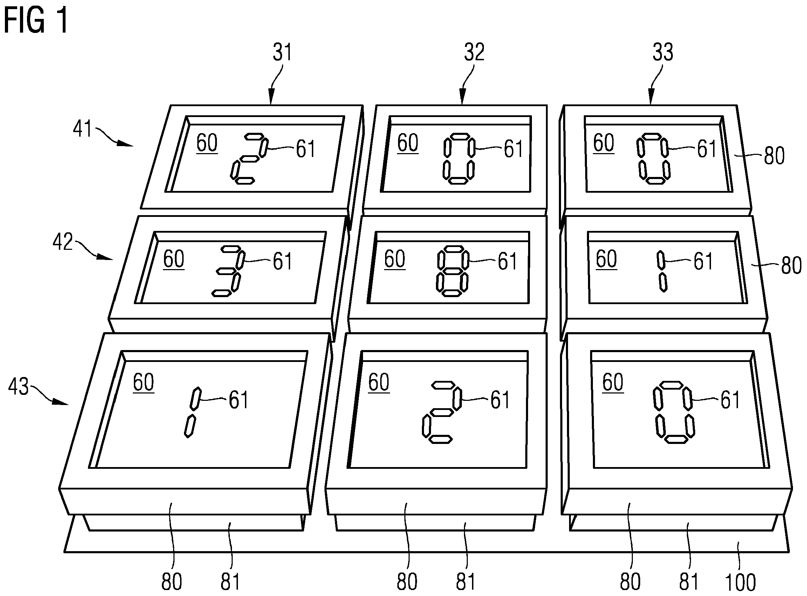

Figur 1 zeigt eine Benutzerschnittstelle 100, welche neun Schalter 80 umfasst, die in einer Matrix angeordnet sind. Jeder Schalter 80 besteht aus einem Sockel 81 und einer Digitalanzeige 60, auf welcher eine Anzahl offener Störungsmeldungen 61 ausgegeben wird. Die Schalter 80 in der oberen Reihe beziehen sich hierbei auf einen ersten Anlagenteil 41, die Schalter 80 in der mittleren Reihe auf einen zweiten Anlagenteil 42 und die Schalter 80 in einer unteren Reihe auf einen dritten Anlagenteil 43. Ferner zeigen die Schalter 80 in der linken Spalte die Anzahl offener Störungsmeldungen 61 mit einer hohen Priorität 31, die Schalter 80 in der mittleren Spalte die Anzahl offener Störungsmeldungen 61 mit einer mittleren Priorität 32 und die Schalter 80 in der rechten Spalte die Anzahl offener Störungsmeldungen 61 mit einer niedrigen Priorität 33 an.

Die Schalter 80 lassen sich jeweils durch Druck auf den oberen Teil bzw. die Digitalanzeige 60 betätigen, woraufhin ein Mikroprozessor die dem jeweiligen Schalter 80 zugeordnete Priorität und den dem jeweiligen Schalter 80 zugeordneten Anlagenteil identifiziert und eine Benutzerführung zur Steuerung des ausgewählten Anlagenteils zur Bearbeitung der ausgewählten Störungsmeldungen auf einer weiteren in Figur 1 nicht näher gezeigten Anzeige initiiert.

Die Schalter 80 können auch in starrer Bauweise bzw. einstückig mit dem Sockel 81 ausgebildet sein, sofern die Digitalanzeige 61 selbst als berührungsempfindlicher Tastschirm ausgebildet ist und eine Berührung detektierten kann, wodurch der jeweilige Schalter 80 ausgelöst wird.

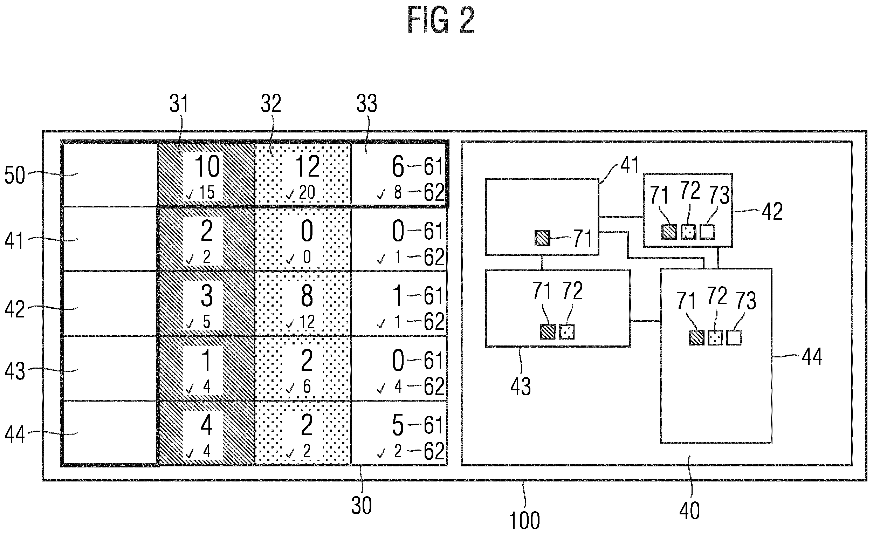

Figur 2 zeigt eine Benutzerschnittstelle 100, welche als Tastschirm ausgebildet und beispielsweise in einem Tablett integriert ist. In der linken Hälfte der virtuellen graphischen Oberfläche der Benutzerschnittstelle 100 ist eine Matrix 30 dargestellt. In der Matrix 30 zeigen unterschiedliche Anzeigeflächen jeweils eine Anzahl offener Störungsmeldungen 61 und eine Anzahl quittierter Störungsmeldungen 62 für einen ersten Anlagenteil 41, einen zweiten Anlagenteil 42, einen dritten Anlagenteil 43 sowie einen vierten Anlagenteil 44, und für eine hohe Priorität 31, eine mittlere Priorität 32 sowie eine niedrige Priorität 33. Die Anlagenteile und Prioritäten sind ihrerseits in einem Tabellenkopf 50 bezeichnet, wobei in der obersten Zeile der Matrix 30 im Tabellenkopf 50 eine Summe der Anzahl offener Störungsmeldungen 61 und der Anzahl quittierter Störungsmeldungen 62 über alle Anlagenteile angezeigt wird.

Beispielsweise zeigt das Anzeigefeld in der zweiten Spalte und der zweiten Zeile der Matrix 30 an, dass für den ersten Anlagenteil 41 zwei Störungsmeldungen offen sind und zwei Störungsmeldungen bearbeitet wurden. Letztere werden noch angezeigt, da sie zwar bearbeitet wurden, der erste Anlagenteil 41 die Fehlerbehebungsmaßnahmen jedoch noch nicht abgeschlossen hat. Dies ist beispielsweise dann der Fall, wenn eine Pumpe noch nicht angelaufen ist.

Die Anzeigeflächen bzw. Felder der Matrix sind ausreichend groß, um auf einem Tastschirm treffsicher durch Berührung ausgewählt werden zu können. Daraufhin wird eine Benutzerführung gestartet, welche eine Steuerung des ausgewählten Anlagenteils zur Bearbeitung der ausgewählten Störungsmeldungen ermöglicht. Hierzu werden beispielsweise anstelle der Matrix 30 - oder ergänzend auf einer weiteren Anzeige - ein Menü oder andere virtuelle Bedienelemente sowie ergänzende Informationen angezeigt, über welche die Steuerung des ausgewählten Anlagenteils zur Fehlerbehebung erfolgen kann.

In der rechten Hälfte der virtuellen graphischen Oberfläche der Benutzerschnittstelle 100 wird neben der Matrix 30 eine logische Sicht 40 einer industriellen Anlage angezeigt, deren Störungsmeldungen sowohl in der Matrix 30 als auch in der logischen Sicht 40 angezeigt werden. Es besteht somit eine Korrelation zwischen beiden Darstellungen, indem die Anzeige der Störungsmeldungen auf beiden Seiten synchron gehalten wird. Hierzu werden der erste Anlagenteil 41, der zweite Anlagenteil 42, der dritte Anlagenteil 43 sowie der vierte Anlagenteil 44 in der logischen Sicht durch Kästen dargestellt, wobei in jedem Anlagenteil bzw. Kasten die zugehörigen Störungsmeldungen mithilfe von unterschiedlich eingefärbten Blocksymbolen für Störungsmeldungen mit hoher Priorität 71, Blocksymbolen für Störungsmeldungen mit mittlerer Priorität 72, und Blocksymbolen für Störungsmeldungen mit niedriger Priorität 73 angezeigt werden.

Anstelle des Blockdiagramms aus Figur 2 kann die logische Sicht 40 beispielsweise auch eine Baumdarstellung der industriellen Anlage anzeigen.

Die in Figur 1 und 2 gezeigten Benutzerschnittstellen eignen sich beispielsweise für einen Einsatz in einer Leitwarte eines Kraftwerks. Die in Figur 2 gezeigte virtuelle Benutzeroberfläche ermöglicht bei Darstellung auf einem Tablett den mobilen Einsatz zur Wartung und Diagnose beispielsweise von Windkraftanlagen.

## Patentansprüche

1. Benutzerschnittstelle (100),
- mit einer Datenschnittstelle, eingerichtet zum Empfang von Störungsmeldungen, welchen jeweils eine Priorität aus einer Mehrzahl von Prioritäten (31, 32, 33) und ein Anlagenteil aus einer Mehrzahl von Anlagenteilen (41, 42, 43, 44) einer industriellen Anlage zugeordnet ist,
- bei der berührungsempfindliche Anzeigeflächen in einer zweidimensionalen Matrix (30) angeordnet sind, wobei die Prioritäten (31, 32, 33) in einer ersten Dimension der Matrix (30) und die Anlagenteile (41, 42, 43, 44) in einer zweiten Dimension der Matrix (30) sortiert sind,
- mit einem zweiten Anzeigebereich, welcher neben den Anzeigeflächen angeordnet ist und zur Ausgabe einer logischen Sicht (40), insbesondere eine Block- oder Baumdarstellung, der industriellen Anlage eingerichtet ist, und
- mit einer Recheneinheit, welche programmiert ist
- zur Anzeige der Störungsmeldungen entsprechend deren Priorität und Anlagenteil auf den entsprechenden Anzeigeflächen,
- zur Untergliederung der logischen Sicht (40) in die Anlagenteile (41, 42, 43, 44),
- zur Anzeige der Störungsmeldungen in oder neben den jeweiligen Anlagenteilen (41, 42, 43, 44) in der logischen Sicht (40), und
- zur Detektion einer Berührung einer der Anzeigeflächen, zur Auswahl der jeweiligen Priorität, des jeweiligen Anlagenteils sowie der zugeordneten Störungsmeldungen und zur Initiierung einer Benutzerführung zur Steuerung des ausgewählten Anlagenteils zur Bearbeitung der ausgewählten Störungsmeldungen.

2. Benutzerschnittstelle (100) nach Anspruch 1,
- bei der jede Anzeigefläche aus einer Digitalanzeige (60) oder einem Tastschirm besteht, und
- bei dem durch Berührung oder Druck auf die Anzeigefläche ein berührungsempfindlicher Kontakt oder Schalter (80) betätigt wird.

3. Benutzerschnittstelle (100) nach Anspruch 1,
- bei der sämtliche Anzeigeflächen auf einem einzigen Tastschirm, insbesondere einem berührungsempfindlichen Tablett, angeordnet sind.

4. Benutzerschnittstelle (100) nach einem der vorangegangenen Ansprüche,
- bei der die Benutzerschnittstelle (100) Teil einer Leitwarte und die industrielle Anlage ein Kraftwerk ist, oder
- bei der die Benutzerschnittstelle (100) ein berührungsempfindliches Tablett und die industrielle Anlage eine Windkraftanlage ist.

5. Verfahren zur Behebung von Störungen einer industriellen Anlage,
- bei dem über eine Datenschnittstelle Störungsmeldungen empfangen werden, welchen jeweils eine Priorität aus einer Mehrzahl von Prioritäten (31, 32, 33) und ein Anlagenteil aus einer Mehrzahl von Anlagenteilen (41, 42, 43, 44) einer industriellen Anlage zugeordnet ist oder wird,
- bei dem berührungsempfindliche Anzeigeflächen in einer zweidimensionalen Matrix (30) angeordnet werden, wobei die Prioritäten (31, 32, 33) in einer ersten Dimension der Matrix (30) und die Anlagenteile (41, 42, 43, 44) in einer zweiten Dimension der Matrix (30) sortiert werden,
- bei dem in einem zweiten Anzeigebereich neben den Anzeigeflächen eine logische Sicht (40), insbesondere eine Block- oder Baumdarstellung, der industriellen Anlage angezeigt wird, und
- bei dem eine Recheneinheit
- Störungsmeldungen entsprechend deren Priorität und Anlagenteil auf den entsprechenden Anzeigeflächen anzeigt,
- die logische Sicht (40) in die Anlagenteile (41, 42, 43, 44) untergliedert, und
- die Störungsmeldungen in oder neben den jeweiligen Anlagenteilen (41, 42, 43, 44) in der logischen Sicht (40) anzeigt, und
- bei dem die Recheneinheit eine Berührung einer der Anzeigeflächen detektiert und daraufhin die jeweilige Priorität, den jeweiligen Anlagenteil sowie die zugeordneten Störungsmeldungen auswählt und eine Benutzerführung zur Steuerung des ausgewählten Anlagenteils zur Bearbeitung der ausgewählten Störungsmeldungen initiiert.

6. Verfahren nach Anspruch 5,
- bei dem die Recheneinheit auf den Anzeigeflächen sowohl eine Anzahl offener Störungsmeldungen (61) als auch eine Anzahl quittierter Störungsmeldungen (62) anzeigt.

7. Verfahren nach Anspruch 5 oder 6,
- bei dem die Recheneinheit am Rand der Matrix (30) einen Tabellenkopf (50) anzeigt, welcher eine Legende für die Prioritäten (31, 32, 33) und Anlagenteile (41, 42, 43, 44) sowie für jede Priorität (31, 32, 33) eine Summe der Anzahl offener Störungsmeldungen (61) über alle Anlagenteile (41, 42, 43, 44) anzeigt.

8. Computerprogramm,
- welches das Verfahren nach einem der Ansprüche 5 bis 7 ausführt, wenn es in einem Computer abgearbeitet wird.

9. Computerprogramm nach Anspruch 8,
- welches auf einem computerlesbaren Datenträger gespeichert ist.

## Claims

1. User interface (100),
- having a data interface set up to receive fault messages which have each been assigned a priority from a plurality of priorities (31, 32, 33) and an installation part from a plurality of installation parts (41, 42, 43, 44) of an industrial installation,
- in which touch-sensitive display areas are arranged in a two-dimensional matrix (30), the priorities (31, 32, 33) having been sorted in a first dimension of the matrix (30) and the installation parts (41, 42, 43, 44) having been sorted in a second dimension of the matrix (30),
- having a second display region which is arranged beside the display areas and is set up to output a logical view (40), in particular a block or tree diagram, of the industrial installation, and
- having a computing unit which is programmed
- to display the fault messages in the corresponding display areas according to their priority and installation part,
- to subdivide the logical view (40) into the installation parts (41, 42, 43, 44),
- to display the fault messages in or beside the respective installation parts (41, 42, 43, 44) in the logical view (40), and
- to detect when one of the display areas is touched, to select the respective priority, the respective installation part and the associated fault messages and to initiate user guidance in order to control the selected installation part for the purpose of processing the selected fault messages.

2. User interface (100) according to Claim 1,
in which each display area consists of a digital display (60) or a touchscreen, and
- in which a touch-sensitive contact or switch (80) is actuated by touching or pressing on the display area.

3. User interface (100) according to Claim 1,
- in which all display areas are arranged on a single touchscreen, in particular a touch-sensitive tablet.

4. User interface (100) according to one of the preceding claims,
- in which the user interface (100) is part of a control room and the industrial installation is a power plant, or
- in which the user interface (100) is a touch-sensitive tablet and the industrial installation is a wind power plant.

5. Method for eliminating faults in an industrial installation,
- in which a data interface is used to receive fault messages which are or have each been assigned a priority from a plurality of priorities (31, 32, 33) and an installation part from a plurality of installation parts (41, 42, 43, 44) of an industrial installation,
- in which touch-sensitive display areas are arranged in a two-dimensional matrix (30), the priorities (31, 32, 33) being sorted in a first dimension of the matrix (30) and the installation parts (41, 42, 43, 44) being sorted in a second dimension of the matrix (30),
- in which a second display region beside the display areas displays a logical view (40), in particular a block or tree diagram, of the industrial installation, and
- in which a computing unit
- displays fault messages in the corresponding display areas according to their priority and installation part,
- subdivides the logical view (40) into the installation parts (41, 42, 43, 44), and
- displays the fault messages in or beside the respective installation parts (41, 42, 43, 44) in the logical view (40), and
- in which the computing unit detects when one of the display areas is touched and then selects the respective priority, the respective installation part and the associated fault messages and initiates user guidance in order to control the selected installation part for the purpose of processing the selected fault messages.

6. Method according to Claim 5,
- in which the computing unit displays both a number of open fault messages (61) and a number of acknowledged fault messages (62) in the display areas.

7. Method according to Claim 5 or 6,
- in which the computing unit displays, at the edge of the matrix (30), a table header (50) which indicates a legend for the priorities (31, 32, 33) and installation parts (41, 42, 43, 44) and indicates a sum of the number of open fault messages (61) over all installation parts (41, 42, 43, 44) for each priority (31, 32, 33).

8. Computer program,
- which carries out the method according to one of Claims 5 to 7 when it is executed in a computer.

9. Computer program according to Claim 8,
- which is stored on a computer-readable data storage medium.

## Revendications

1. Interface utilisateur (100)
- comportant une interface de données configurée pour recevoir des messages de dysfonctionnement auxquels sont respectivement associées une priorité d'une pluralité de priorités (31, 32, 33) et une partie d'installation d'une pluralité de parties d'installation (41, 42, 43, 44) d'une installation industrielle,
- dans laquelle des surfaces d'affichage tactiles sont agencées dans une matrice bidimensionnelle (30), les priorités (31, 32, 33) étant classées dans une première dimension de la matrice (30) et les parties d'installation (41, 42, 43, 44), dans une deuxième dimension de la matrice (30),
- comportant une deuxième zone d'affichage qui est agencée à côté des surfaces d'affichage et est configurée pour produire en sortie une vue logique (40), et plus particulièrement une représentation en blocs ou une arborescence, de l'installation industrielle et
- comportant une unité informatique qui est programmée pour :
afficher les messages de dysfonctionnement selon leur priorité et partie d'installation sur les surfaces d'affichage correspondantes,
subdiviser la vue logique (40) en les parties d'installation (41, 42, 43, 44),
afficher les messages de dysfonctionnement dans ou à côté des parties d'installation respectives (41, 42, 43, 44) dans la vue logique (40) et
détecter un contact avec une des surfaces d'affichage pour sélectionner la priorité respective, la partie d'installation respective et les messages de dysfonctionnement associés et pour amorcer un guidage d'utilisateur pour la commande de la partie d'installation sélectionnée pour traiter les messages de dysfonctionnement sélectionnés.

2. Interface utilisateur (100) selon la revendication 1, dans laquelle chaque surface d'affichage se compose d'un affichage numérique (60) ou d'un écran tactile et dans laquelle un contact ou interrupteur tactile (80) est actionné par contact ou pression sur la surface d'affichage.

3. Interface utilisateur (100) selon la revendication 1, dans laquelle toutes les surfaces d'affichage sont agencées sur un seul et unique écran tactile, et plus particulièrement sur une tablette tactile.

4. Interface utilisateur (100) selon l'une des revendications précédentes, dans laquelle l'interface utilisateur (100) fait partie d'un poste de commande et l'installation industrielle est une centrale électrique ou dans laquelle l'interface utilisateur (100) est une tablette tactile et l'installation industrielle est une installation éolienne.

5. Procédé pour remédier à des dysfonctionnements d'une installation industrielle,
- dans lequel sont reçus, via une interface de données, des messages de dysfonctionnement auxquels sont associées ou on associe respectivement une priorité d'une pluralité de priorités (31, 32, 33) et une partie d'installation d'une pluralité de parties d'installation (41, 42, 43, 44) d'une installation industrielle,
- dans lequel des surfaces d'affichage tactiles sont agencées dans une matrice bidimensionnelle (30), les priorités (31, 32, 33) étant classées dans une première dimension de la matrice (30) et les parties d'installation (41, 42, 43, 44), dans une deuxième dimension de la matrice (30),
- dans lequel est affichée, dans une deuxième zone d'affichage, à côté des surfaces d'affichage, une vue logique (40), et plus particulièrement une représentation en blocs ou une arborescence, de l'installation industrielle et
- dans lequel une unité informatique
affiche des messages de dysfonctionnement selon leur priorité et partie d'installation sur les surfaces d'affichage correspondantes,
subdivise la vue logique (40) en les parties d'installation (41, 42, 43, 44) et
affiche les messages de dysfonctionnement dans ou à côté des parties d'installation respectives (41, 42, 43, 44) dans la vue logique (40) et
- dans lequel l'unité informatique détecte un contact avec une des surfaces d'affichage et sélectionne ensuite la priorité respective, la partie d'installation respective ainsi que les messages de dysfonctionnement associés et amorce un guidage d'utilisateur pour la commande de la partie d'installation sélectionnée pour le traitement des messages de dysfonctionnement sélectionnés.

6. Procédé selon la revendication 5, dans lequel l'unité informatique affiche, sur les surfaces d'affichage, non seulement un nombre de messages de dysfonctionnement ouverts (61), mais aussi un nombre de messages de dysfonctionnement acquittés (62).

7. Procédé selon la revendication 5 ou 6, dans lequel l'unité informatique affiche, sur le bord de la matrice (30), un entête de table (50) qui montre une légende pour les priorités (31, 32, 33) et parties d'installation (41, 42, 43, 44) ainsi que, pour chaque priorité (31, 32, 33), une somme du nombre de messages de dysfonctionnement ouverts (61) pour toutes les parties d'installation (41, 42, 43, 44).

8. Programme informatique qui exécute le procédé selon l'une des revendications 5 à 7 s'il est exécuté sur un ordinateur.

9. Programme informatique selon la revendication 8, lequel est sauvegardé sur un support de données lisible par ordinateur.
